# EUROPÄISCHE PATENTSCHRIFT

(11) **EP 1 321 217 B1**
(45) Veröffentlichungstag und Bekanntmachung des Hinweises auf die Patenterteilung: **12.03.2014**
(21) Anmeldenummer: 02027083.1
(22) Anmeldetag: 03.12.2002
(51) Int. Cl.: B23K 35/38, B01J 19/14

(54) **Verfahren zur Herstellung einer Schutzgasmischung**
Process for manufacturing a protective gas
Procédé de fabrication d'un gaz protecteur

(30) Priorität: 20.12.2001 DE 10162938
(43) Veröffentlichungstag der Anmeldung: 25.06.2003
(73) Patentinhaber: Linde AG, 80331 München (DE)
(72) Erfinder: Miklos, Ernst, 82327 Tutzing (DE); Haas, Burkhard, 85716 Unterschleissheim (DE)
(74) Vertreter: Kasseckert, Rainer

(56) Entgegenhaltungen:
- EP-A- 0 020 174
- EP-A- 0 544 187
- FR-A- 2 646 496
- US-A- 3 526 740
- US-A- 5 210 389
- US-A- 5 367 137

## Beschreibung

Die Erfindung betrifft ein Verfahren zur Herstellung einer Schutzgasmischung zum Lichtbogen-Fügen, insbesondere zum Lichtbogen-Schweißen, welche Argon und mindestens ein weiteres Gas als Dotiergas im Bereich von 0,001 bis 0,7 Vol.-% (10 bis 7000 vpm) enthält, wobei das Argon durch Verdampfen aus der flüssigen Phase bereitgestellt wird und das durch Verdampfen bereitgestellte Argon mit einer Gasvormischung vermischt wird.

Unter Lichtbogen-Fügen fällt sowohl das schon lange bekannte Schweißen mit Lichtbogen als auch das in jüngster Zeit an Bedeutung gewinnende Löten mit Lichtbogen unter Schutzgas. Desweiteren gehört zum Lichtbogen-Fügen auch das Verbinden von artverschiedenen Werkstoffen, bei welchem ein Werkstoff aufgeschmolzen wird, während der andere nur erwärmt wird.

Beim Lichtbogenschweißen unter Schutzgas stellen inerte Gase den überwiegenden Anteil im Schutzgas. Das beim Schutzgasschweißen am häufigsten eingesetzte Inertgas ist Argon. Durch Zugabe von Helium in Argon wird die Wärmebilanz des Schutzgases im Lichtbogen und in der Schmelze verbessert, wodurch werkstoffabhängig ein tieferer Einbrand, eine bessere Entgasung und eine bessere Benetzung erreicht wird. Dadurch werden mit Helium höhere Schweißgeschwindigkeiten erzielt. Vor allem beim Schweißen von Aluminium und Aluminium-Legierungen werden - neben Argon - Mischungen aus Argon und Helium benützt.

Bei Schweißen oder Löten von Werkstoffen mit inerten Gasen treten oft Prozessstörungen auf. Diese werden durch Lichtbogeninstabilitäten verursacht. Um nun diesen Nachteil zu beseitigen, werden den inerten Gasen kleine Mengen an aktiven Gasen zugesetzt, die Gase werden dotiert. Die Dotierung erfolgt im Bereich von unter einem Prozent (vpm Bereich). Gut bekannt ist beispielsweise das Dotieren von Inertgasen mit CO₂, O₂, NO und N₂ zum Schweißen von Aluminiumwerkstoffe. Eine Dotierung des Schweißschutzgases mit CO₂ oder O₂ für Nickel-Basis-Werkstoffe ist in der EP 544 187 beinhaltet. Auch beim Lichtbogen-Löten ist eine Dotierung mit CO₂ oder O₂ bekannt und in der EP 1 101 559 beschrieben. Durch die Beimischung eines Dotiergases verbessert sich nicht nur die Lichtbogenstabilität sondern auch das Nahtaussehen wird qualitativ hochwertig und eine Oxidation des Werkstücks wird vermieden.

In der Patentschrift CH 634 498 sind verschiedene Stickstoffverbindungen zur Dotierung erwähnt. Dabei hat sich vor allem der Zusatz von NO in Argon oder in einem Gemisch aus Argon und Helium bewährt. Derartige Schutzgase führen zu einem exzellenten Aussehen der Schweißnähte und vermeiden sowohl eine Oxidation des Werkstücks sowie Schweißspritzer auf dem Werkstück.

Um nun eine optimale Schutzgasmischung zum Schweißen benutzen zu können, muss diese in ausreichend großer Menge der Schweißvorrichtung zur Verfügung stehen. Normalerweise wird eine Schutzgasmischung mit mehreren Komponenten beim Gaselieferanten bereits fertig gemischt und in Gasflaschen zum Gasverbraucher geliefert. Der Gasverbraucher kann dann die fertige Gasmischung ohne weitere Arbeitsschritte verwenden. Von Vorteil ist hierbei die niedrige Konzentration des - im Falle von NO giftigen - Dotiergases in der Schutzgasmischung, von Nachteil sind jedoch die großen Gasmengen, welche zum Gasverbraucher geliefert werden müssen. Dies ist vor allem bei einem hohen Gasverbrauch aufwändig durchzuführen. Da sich durch Verflüssigung das Volumen des Argons um ein vielfaches reduziert, werden große Gasmengen normalerweise flüssig geliefert und aufbewahrt. Die benötigte Gasmenge wird in Form von verdampfter Flüssigkeit entnommen. Deshalb besitzen Großverbraucher in der Regel eine Flüssig-Argon-Vorsorgung. Fertige Gasmischung sind folglich für den Großverbraucher - vor allem im Vergleich zur Flüssig-Argon-Versorgung - umständlich in ihrer Handhabung.

Eine andere Möglichkeit für den Gasverbraucher, die gewünschte Schutzgasmischung zu erhalten, ist es, diese selbst vor Ort zu mischen. Benötigt der Gasverbraucher Mischungen, bei welchen jede der Komponenten mit einem Volumenanteil von mindestens einem Prozent vorkommen, können handelsübliche Mischkomponenten verwendet werden. Gasmischungen mit Volumenanteilen von unterhalb einem Prozentpunkt, wozu ja dotierte Schutzgasmischungen zu zählen sind, können jedoch mit handelsüblichen Mischern nicht hergestellt werden. Für den Gasverbraucher ist deshalb die Herstellung von dotierten Schutzgasmischungen aufwändig in der Durchführung. Als Nachteil aller Mischtechniken vor Ort ist darüber hinaus zu sehen, dass der Gasverbraucher u.U. mit giftigen NO umgehen muss - ein großes Gefahrenpotenzial.

Die EP 0 020 174 beinhaltet ein Verfahren zum Mischen von Gasen mit unterschiedlicher Wärmeleitfähigkeit. Mit diesem Verfahren ist es möglich, eine dotierte Schutzgasmischung herzustellen. Die dort beschriebene Mischtechnik ermöglicht es, in einer Mischung auch Volumenanteile von wenigen Prozentpunkten exakt bereitzustellen.

Die FR 2646496 beinhaltet ein Verfahren zum Herstellen eines Gasgemisches mit N₂, Ar, CO₂ und O₂ oder Ar, CO₂ und O₂, wobei N₂ beziehungsweise Ar einem Flüssiggastank entnommen wird.

Die WO91/13720 zeigt einen weiteren Weg zur Herstellung einer NO dotierten Schutzgasmischung auf, welcher die Volumenverkleinerung des Argons beim Verflüssigen nutzt. Bei diesem Verfahren wird NO in flüssigem Argon gelöst und anschließend wir diese Lösung beim Gasverbraucher verdampft.

Die Bereitstellung von dotierten Schutzgasmischungen ist jedoch technisch und in praktischer Durchführung nicht zufriedenstellend gelöst. Insbesondere existiert kein einfaches und unkompliziertes Verfahren, das die Vorteile, die durch Verwendung einer Flüssig-Argon-Versorgung entsteht, mit den Vorteilen, die die Zugabe eines Dotiergas liefert, kombiniert. Wichtig ist jedoch nicht nur ein praktisches Herstellungsverfahren für Schutzgasgemische sondern auch eine passende Zusammenstellung der Gasanteile der Schutzgasmischung, da die Schutzgasmischung die Qualität der Schweißung bzw. der Lotverbindung entscheidend bestimmt.

Der Erfindung liegt daher die Aufgabe zugrunde, ein Verfahren aufzuzeigen, welches bei der Herstellung einer dotierten Schutzgasmischung die Verwendung einer Flüssig-Argon-Versorgung erlaubt. Insbesondere soll mit dieser Erfindung ermöglicht werden, dotierte Schutzgasgemische mit Heliumanteil herzustellen. Der Erfindung liegt ferner die Aufgabe zugrunde, eine Gasvormischung bereitzustellen, welche zur Herstellung einer solchen Schutzgasmischung geeignet ist.

Die Aufgabe wird hinsichtlich des Verfahrens dadurch gelöst, dass die Gasvormischung neben Helium und/oder Argon das Dotiergas mit einer Konzentration von 0,005 bis 1,0 Vol.-% (50 bis 10 000 vpm), vorzugsweise bis 0,8 Vol.-% (8000 vpm), enthält, und als Dotiergas ein Gas oder ein Gemisch aus den Gasen N₂, O₂, oder CO₂ verwendet wird. Da bei diesem erfindungsgemäßen Verfahren das Argon, welches den Hauptanteil in der Schutzgasmischung stellt und welches von daher in sehr großer Menge benötigt wird, der Flüssig-Argon-Versorgung entnommen und verdampft wird, können alle Vorteile, die eine Flüssig-Argon-Versorgung bietet, genutzt werden. Das gasförmige Argon wird dann mit der Gasvormischung vermischt. Da die Gasvormischung aus mit Dotiergas versetztem Helium besteht, wird sich beim Mischen die richtige Dotiergaskonzentration im Bereich von 10 bis 7000 vpm (0,001 bis 0,7 Vol.-%) genau dann einstellen, wenn der Anteil des Heliums die geforderte Größe erreicht. Der Gasverbraucher benötigt nun - bei vorhandener Flüssig-Argon-Versorgung - lediglich einen Mischer, um eine optimale Schweißschutzgasmischung zu erhalten. Dazu ist ein handelsüblicher Zwei-Komponenten-Mischer völlig ausreichend. Die Mischungsverhältnisse, welche mit dem erfindungsgemäßen Verfahren eingestellt werden müssen, liegen im Prozentbereich und sind folglich mit handelüblichen Mischern völlig unproblematisch einstellbar. Die nach dem erfindungsgemäßen Verfahren hergestellte Schutzgasmischung ist zum Lichtbogen-Schweißen optimal, da die Dotiergase für gutes Nahtaussehen und Oxidationsvermeidung sorgen, während Helium einen guten Einbrand, eine gute Entgasung und eine gute Benetzung bewirkt.

Mit Vorteil enthält die beim Mischen entstehende Schutzgasmischung Helium mit einem Anteil zwischen 5 und 70 Vol.-%. Bevorzugt liegt der Heliumanteil zwischen 10 und 50 Vol.-%, besonders bevorzugt zwischen 15 und 30 Vol.-%. Aufgrund dieses Heliumanteils eignet sich die Schutzgasmischung in hervorragender Weise zum Lichtbogen-Schweißen und Lichtbogen-Löten von Aluminium und Aluminium-Legierungen sowie von Nickel-Basis-Legierungen.

Mit der Erfindung wird als Dotiergas ein Gas oder ein Gemisch aus den Gasen N₂, O₂ oder CO₂ verwendet. Diese Dotiergase stellen sicher, dass nicht nur die Schweißnähte und die Lotverbindungen optimal aussehen und eine unzulässige Oxidation vermieden wird, sondern auch eine Verbesserung der Lichtbogenstabilität eintritt.

Im folgendem soll die Erfindung anhand von zwei Beispielen näher beschrieben werden, welche sich in Heliumanteil und in der Menge des Dotiergases unterscheiden. Zur ihrer Herstellung wurden verschiedene erfindungsgemäße Gasvormischungen verwendet.

In Beispiel 1 wird eine Schutzgasmischung bestehend aus Argon, Helium und 300 vpm (0,03 Vol.-%) O₂ hergestellt. Dazu wird beim Gasverbraucher Argon aus der Flüssig-Argon-Versorgung entnommen und verdampft. Das gasförmige Argon wird nun in einem handelsüblichen Zwei-Komponenten-Mischer mit einer Gasvormischung, welche Helium dotiert mit 2000 vpm (0,2 Vol.-%) O₂ enthält, vermischt. Die Gasvormischung wurde vom Gaslieferanten gemischt und in Gasflaschen zum Gasverbraucher geliefert. Die so erhaltene Schutzgasmischung mit 300 vpm (0,03 Vol.-%) O₂ enthält 15 Vol.-% Helium und Argon im verbleibendem Volumen. Sie eignet sich in hervorragender Weise zum Fügen von artverschiedener Verbindungen zwischen Aluminium-und Stahlblechen. Eine Schutzgasmischung, die nach dieser Variante des erfindungsgemäßen Verfahrens hergestellt wurde, ist bei großem Verbrauch preislich erheblich günstiger in seiner Verwendung - verglichen mit einer Belieferung des entsprechenden Fertiggemisches.

Die Herstellung einer Schutzgasmischung aus Argon, Helium mit einem Anteil von 50 Vol.-% und 500 vpm (0,05 Vol.-%) CO₂ als Dotierung ist nun in Beispiel 2 näher erläutert. Die Gasvormischung enthält hierzu Helium dotiert mit 1000 vpm (0,1 Vol.-%) CO₂ und wurde vom Gaslieferanten fertig gemischt und in einzelnen oder gebündelten Flaschen zum Gasverbraucher geliefert. Argon wird nun aus der Flüssig-Argon-Versorgung des Gasverbrauchers entnommen, verdampft und in einem handelsüblichen Zwei-Komponenten-Mischer mit der Gasvormischung vermischt. Die Schutzgasmischung enthält nun 500 vpm CO₂, 50 % Helium und Argon im verbleibendem Volumen und zeigt seine Vorteile insbesondere beim Metall-Schutzgas-Schweißen von Nickel-Basis-Legierungen. Durch das Herstellungsverfahren kann diese Schutzgasmischung in großen Mengen preislich sehr günstig zur Verfügung gestellt werden und somit können die Vorteile auch von Großkunden genutzt werden.

## Patentansprüche

1. Verfahren zur Herstellung einer Schutzgasmischung zum Lichtbogen-Fügen, insbesondere zum Lichtbogen-Schweißen, welche Argon und mindestens ein weiteres Gas als Dotiergas im Bereich von 0,001 bis 0,7 Vol.-% enthält, wobei das Argon durch Verdampfen aus der flüssigen Phase bereitgestellt wird und das durch Verdampfen bereitgestellte Argon mit einer Gasvormischung vermischt wird, **dadurch gekennzeichnet, dass** die Gasvormischung neben Helium und/oder Argon das Dotiergas mit einer Konzentration von 0,005 bis 1 Vol.-%, vorzugsweise bis 0,8 Vol.-%, enthält, und dass als Dotiergas ein Gas oder ein Gemisch aus den Gasen N₂, O₂ oder CO₂ verwendet wird.

2. Verfahren nach Anspruch 1, **dadurch gekennzeichnet, dass** die beim Mischen entstehende Schutzgasmischung Helium mit einem Anteil zwischen 5 und 70 Vol.-%, bevorzugt zwischen 10 und 50 Vol.-%, besonders bevorzugt zwischen 15 und 30 Vol.-%, enthält.

## Claims

1. Process for manufacturing a protective gas mixture for arc joining, in particular for arc welding, which contains argon and at least one further gas as a doping gas in the range from 0.001 to 0.7% by volume, the argon being provided by vaporizing from the liquid phase and the argon that is provided by vaporizing being mixed with a gas premix, **characterized in that**, along with helium and/or argon, the gas premix contains the doping gas with a concentration of 0.005 to 1% by volume, preferably to 0.8% by volume, and **in that** a gas or a mixture of the gases N₂, O₂ or CO₂ is used as the doping gas.

2. Process according to Claim 1, **characterized in that** the protective gas mixture produced during the mixing contains helium in a proportion between 5 and 70% by volume, preferably between 10 and 50% by volume, particularly preferably between 15 and 30% by volume.

## Revendications

1. Procédé de fabrication d'un mélange de gaz protecteur destiné à l'assemblage à l'arc électrique, en particulier au soudage à l'arc électrique, qui contient de l'argon et au moins un autre gaz comme gaz de dopage dans la plage de 0,001 à 0,7 % en volume, dans lequel on prépare l'argon par évaporation à partir de la phase liquide et on mélange l'argon préparé par évaporation avec un prémélange de gaz, **caractérisé en ce que** le prémélange de gaz contient, en plus d'hélium et/ou d'argon, le gaz de dopage en une concentration de 0,005 à 1 % en volume, de préférence jusqu'à 0,8 % en volume, et **en ce que** l'on utilise comme gaz de dopage un gaz ou un mélange parmi les gaz N₂, O₂ ou CO₂.

2. Procédé selon la revendication 1, **caractérisé en ce que** le mélange de gaz protecteur formé lors du mélange contient de l'hélium en une proportion comprise entre 5 et 70 % en volume, de préférence entre 10 et 50% en volume, et de préférence encore entre 15 et 30 % en volume.
